# EUROPEAN PATENT APPLICATION

(11) **EP 4 480 817 A1**
(43) Date of publication of application: **25.12.2024**
(21) Application number: 24177941.2
(22) Date of filing: 24.05.2024
(51) Int. Cl.: B64D 11/00, B64D 11/02, B64D 11/04, B33Y 80/00, B64F 5/00, G06F 30/15, G06F 30/27

(54) **BIONIC STRUCTURAL ELEMENT WITH INTEGRATED FUNCTIONALITY FOR A PASSENGER CABIN OF AN AIRCRAFT, INTERIOR COMPONENT FOR AN AIRCRAFT, AND AIRCRAFT**

(30) Priority: 06.06.2023 DE 102023114885
(71) Applicant: AIRBUS Operations GmbH, 21129 Hamburg (DE)
(72) Inventor: HEVIA, Alejandro Rego, 21129 Hamburg (DE); REISS, Matthias, 21129 Hamburg (DE); ERNITS, Rafael Mortnesen, 21129 Hamburg (DE); KIEHNE, Oliver, 21129 Hamburg (DE); PAYK, Jakob, 21129 Hamburg (DE); SCHÄFER, Bastian, 21129 Hamburg (DE); DAHMS, Tobias, 21129 Hamburg (DE); PUPKES, Birte, 21129 Hamburg (DE); KEISER, Dennis, 21129 Hamburg (DE); FREITAG, Michael, 21129 Hamburg (DE)
(74) Representative: LKGLOBAL Lorenz & Kopf Patentanwalt Attorney at Law PartG mbB

(57) **Abstract**

Disclosed herein is a structural element (100) for a passenger cabin of an aircraft (200) that is build using biomimicry methods. The structural element (100) comprises a generative structure (110), and a functional component (120). The generative structure (110) comprises at least one accommodating space (111). The functional component (120) is arranged within the at least one accommodating space (111). The generative structure (110) comprises a load topology optimized structure based on a bioinspired generative design that that is configured to enable the structural integrity of the structural element (100) while simultaneously providing integrated functionalities via the functional component (120). Further, an interior component (200) for an aircraft (300) is disclosed that comprises at least one such structural element (100), and an aircraft (300) comprising at least one structural element (100). For example, an aircraft galley may include a structural component (100) that may therefore, for example, include integrated wiring, plumbing or other functionalities.

## Description

### TECHNICAL FIELD

The present disclosure relates to a structural element for a passenger cabin of an aircraft that integrates certain functionalities, to an interior component comprising such structural element, and to an aircraft comprising such structural element and/or interior component. In particular, the disclosure relates to a structural element that is designed using biomimicry methods and that has a load topology optimized structure based on a bioinspired generative design.

### TECHNICAL BACKGROUND

Aircraft comprise a multitude of interior components such as aircraft monuments (for example, galleys, lavatories, stowage units, wall panels, etc.). Reducing weight, in general, is one of the main goals in aircraft construction and design. Therefore, interior components today mainly consist of honeycomb panels and some of them include functional components such as electrical wiring, plumbing, and other elements (for example for heating elements, water supply units, etc. other in aircraft galleys or in general galley inserts (GAINs)). In order to mount such functional components to the interior components, the honeycomb panels are equipped with inserts using different bracket elements and screws. Using these bracket elements and screws, the functional components are attached to the interior component.

However, using this current solution for equipping aircraft monuments with functions/functional components, many additional parts are needed, affording more material and ultimately adding weight to the system.

EP 3 173 331 A1 shows a cover panel for a core panel of a structural aircraft component. The cover panel includes a protection cover having an outer shape corresponding to the outer shape of the core panel and including at least one cutout aperture, and at least one fabric panel mounted to the protection cover and covering the at least one cutout aperture.

EP 3 173 953 A1 shows a computer-implemented method for space frame design. The method involves constructing a load stress map in a geometrical boundary representation of a design space, defining a plurality of attachment points and load application points in the design space, creating a starting network of interconnecting lines between each two of the plurality of attachment points and load application points in the design space, assigning load application factors to each line of the starting network of interconnecting lines based on values of the load stress map, generating a plurality of potential space frame designs by selectively culling different subsets of lines of the starting network of interconnecting lines for each potential space frame design according to variable culling parameters, evaluating the performance score of each of the plurality of potential space frame designs with respect to a number of predefined optimization parameters, combining the culling parameters for the potential space frame designs the performance score of which is above a predefined performance threshold, and iterating the steps of generating potential space frame designs and evaluating the potential space frame designs on the basis of the combined culling parameters.

EP 3 173 330 A1 shows a rod connection system that includes a first structural member (R) having an angled pin connector (RJ1) integrally formed at an end portion of the first structural member with angled pins being spaced apart from and protruding parallel to an end face of the first structural member. The rod connection system further includes a second structural member (R) having an angled socket connector (RJ2) integrally formed at an end portion of the second structural member with angled tubes as sockets for the angled pins of the first structural member. The angled tubes are spaced apart from and protruding parallel to an end face of the second structural member.

The project TechnoHyb *(Fraunhofer IWU, TU Braunschweig, INVENT GmbH, C-CON GmbH, Prosche AG, VOLKSWAGEN AG - https:*//*www.hybridleichtbau.fraunhofer.de*/*de*/*forschungsprojekte*/*technohyb.html)* focus on the development of process and tool technologies for functionally integrated hybrid designs. By combining materials with different properties, hybrid constructions are studied for potential integration of non-structural functions into structural components. However, the project focus on process and tool technologies of functionally integrated hybrid designs and combining different materials for function integration. It doesn't examine the design possibilities for function integration.

US 9 517 128 B2 relates generally to 3D printing of nanoelectronic materials and more particular to interweaving of electronic and biological functionality using 3D printing. The document combines electronic parts and functions with biological materials. However, the document does not include the integration of functions in structural elements.

DE 10 2005 061 506 B4 relates to a structural part for a vehicle, on which at least one non-structurally relevant functional element is arranged, which has a hollow profile in cross-section. An essential idea of the document is that the functional element and the structural component are at least partially formed of fiber-reinforced plastic, wherein the functional element is integrated into the structural part. However, the documents does only describe vehicles and not the application in aircraft.

DE10 2016 203 890 A1 relates to the functional integration of a humidifier for a fuel cell system in a body structure element and preferably the functional integration of a humidifier for a fuel cell system, a crash performance enhancing element, in particular one extruded profile, and a body structure element.

### DESCRIPTION

Accordingly, it is an objective to provide structural elements with integrated functionalities to reduce the number of components required for passenger cabin interior parts. It is also an objective of the disclosure to achieve lightweight construction with function integration in structural elements.

This objective is solved by the subject matter of the independent claims. Further embodiments are described in the dependent claims as well as in the following description.

According to a first aspect, a structural element for a passenger cabin of an aircraft is provided. The structural element comprises a generative structure, and a functional component. The generative structure comprises at least one accommodating space. The functional component is arranged within the at least one accommodating space. The generative structure comprises a load topology optimized structure based on a bioinspired generative design that is configured to enable the structural integrity of the structural element while simultaneously providing integrated functionalities via the functional component.

The present invention utilizes biomimicry methods (i.e., bionic structures) to directly integrate functional components into structural elements without the need to additionally attach such functional components on the outside to the structural element. The structural element thereby may be any element that is mounted within a passenger cabin of an aircraft, such as, for example, a cabin monument or may at least be an integral load carrying part of such a cabin element. For example, the structural element may be a load carrying structure of a cabin monument, of a galley, a wall panel, or of any other conceivable cabin element. In some embodiments, as described further below, the structural element may, for example, comprise panels with integrated channels for wiring harnesses or fluid conduits or for carrying other functional components such as heating elements, sensors, thermal insulations, etc. In other embodiments, the structural element may, for example, be a truss structure that integrates such functionalities within beams of the truss structure.

For example, in aircraft galleys, multiple functionalities such as heating functions, water supply and drainage, electrical wiring for devices within the galley, exhaust channels, or other functionalities are utilized. Currently, i.e., in the state of the art, cabin elements such as cabin monuments comprise honeycomb panels and the above described functionalities are provided, e.g., by attaching corresponding wiring components, plumbing components, etc. to the cabin element (such as the galley), which affords additional mounting effort and attachment components. However, the present invention integrates such functionalities directly into the structural component.

For this, the disclosed structural component comprises a generative structure utilizing a load topology optimized structure based on a bioinspired generative design and that incorporates at least one accommodating space for a functional component.

Generative design (sometimes also called algorithmic design) is a design process that uses AI (artificial intelligence) to autonomously create optimal designs from a set of system design requirements (such as strength requirements, functionality requirements, or in general any other requirement). By utilizing a generative design approach, it is possible to interactively specify requirements and goals, including preferred materials and manufacturing processes, and a generative engine will automatically produce a manufacture-ready design. Generative design automatically delivers solutions based on given constraints and requirements. In general, generative design is an iterative design process that, in a first phase, generates outputs that meet the specified constraints to varying degrees. In a second phase, designers can then provide feedback to the generative engine that explores the feasible region by selecting preferred outputs or changing input parameters for future iterations. Either or both phases can be done by humans or software/computers. For example, a generative adversarial network (e.g., a pair of neural networks) can be used. The first neural network generates a trial output, and the second neural network then provides feedback for the next iteration. In general, the output can then be items such as images, sounds, architectural models, animation, and industrial parts. Generative design allows to explore orders of magnitude more permutations, exploring the interactions of the enormous numbers of design elements in small increments. It mimics nature's evolutionary approach to design through genetic variation and selection (biomimetics). Compared with traditional top-down design approaches, generative design addresses design problems by using a bottom-up paradigm. The solution itself then evolves to an optimal, or at least very good, solution. Generative design involves rule definition and result analysis which are integrated with the design process. By defining parameters and rules, the generative approach is able to provide optimized solutions for structural stability, aesthetics, or any other constraints. Possible design algorithms include cellular automata, shape grammar, genetic algorithm, space syntax, and artificial neural network. However, any other suitable algorithms may be used. Due to the high complexity of the solution generated, rule-based computational tools, such as finite element method and topology optimization, may be more preferable to evaluate and optimize the generated solution. The iterative process provided by computer software enables a trial-and-error approach in design and may include the involvement of the engineer/designer in the optimization process. The software then begins iterating, changing parameters incrementally over time (much like random mutations try out new combinations of animal DNA), and testing the generated solution against the necessary performance targets (i.e., set requirements), much like life tests its DNA mutations. For example, over millions of generations, the generative engine adds a bit of material at one location and removes a bit of material at another location (or changes any other parameters). Afterwards the generative engine checks if the part is (for example) stronger or weaker, lighter or heavier than its predecessors (or, in general, if it meets the set requirements).

Within a surprisingly short amount of time (for example a couple of hours, if having access to high-powered cloud processing), the generative engine provides shapes humans could never have directly designed. But they're strikingly similar to the work of nature; where there's more stress to be dealt with, they gradually become thicker. Where there's less stress, they get thinner. Support structures waste away where they're not needed and tend to line up with the load path. Therefore, the generative structure herein also is referred to as having a "bioinspired" generative design.

The at least one accommodating space may, for example, be a channel within the generative structure (or parts thereof). For example, the structural element may comprise a plurality of hollow beams or roads that build a truss structure that carries the mechanical loads. In this scenario, the interior of the hollow beams or rods would build the at least one accommodating space. In another example, the generative structure may be built by panels that are mounted together to build the structural element (which may itself be, for example, be an interior component for the aircraft cabin). Such panels may then include corresponding channels which act as accommodating spaces. Accommodating spaces of multiple parts of the structural element (for example of multiple hollow beams or of multiple panels) may also be interconnected with each other in any suitable way. In this way, it is, for example, possible to build intricate networks of the accommodating spaces, for example to build contiguous fluid channels or channels for wiring harnesses that run through the structural element.

In either case, the accommodating space may, for example, be used for supporting/guiding electrical wiring harnesses or for being used as tubes (for example, for guiding fluids such as water or air), or for accommodating any other functional components (such as heating elements, insulations, sensors, exhaust channels, etc.). In general, the term functional component, as used herein, refers to any conceivable functional component or element, such as such guides for wiring harnesses or tubing/plumbing. In particular, the accommodating spaces may also itself be the functional component(s), for example if the accommodating spaces are used as fluid channels or for guiding wiring harnesses. In this case, the interior of the accommodating space is the functional component.

Independent of the specific implementation of the structural element (e.g., as comprising a truss structure or comprising panels with integrated channels (or a combination of these design possibilities)), the overall design of the structural element is determined by a generative design approach, as described above. In particular, the generative design algorithm may consider the desired functional integration, the arrangement of components of the structural element within given design space, the variation of working principles (for example the adjustability of a galley for different tasks), the optimization of force transmission paths, and the possibility of the adjustment of subsystems and their interrelationship to optimize the entire technical system the structural element is a part of, as input parameters or constraints for the generative engine. In particular, one additional constraint may also be the adjustability of the structural element for different cabin arrangements (for example regarding the size of the structural element (e.g., the size of a galley, such a full size, half size, etc.). Utilizing a corresponding generative design algorithm, the optimal construction can be found that in particular provides a structural element providing the desired integrated functionalities while simultaneously providing the necessary structural integrity.

According to an embodiment, the functional component comprises at least one of the following: a fluid conduit, a cable channel, a wiring harness, a sensor, a heating and/or cooling element, a thermally insulating element, and an exhaust channel.

For example, optionally multiple accommodating spaces within parts of the structural element (for example, within multiple rods of a truss structure or within multiple panels comprising integrated accommodating spaces) may be interconnected with each other so as to build a continuous fluid conduit (channel) or a cable channel. Further, within the at least one accommodating space, wiring harnesses, sensors (such as temperature, moisture, position, or any other sensor), heating elements (such as inductive or resistive heating elements), cooling elements (for example by means of heat pumps or similar), thermal insulations (for example corresponding coatings within the accommodating spaces), or any other functional component may be provided.

According to a further embodiment, the structural element comprises a plurality of accommodating spaces. The plurality of accommodating spaces are interconnected with each other so as to build a network of accommodating spaces.

For example, multiple hollow beams or rods of a corresponding truss structure or multiple panels having integrated accommodating spaces (for example in the form of corresponding channels) may be interconnected with each other such that at least two of the accommodating spaces together build a common accommodating space (such as a continuous channel/conduit). Such a design may, for example, be used to provide integrated electrical wiring and/or plumbing or other integrated functionalities relying on such a network.

According to a further embodiment, the structural element further comprises at least one panel. The at least one panel itself includes at least one accommodating space that is part of the panel.

For example, the structural element overall may be constructed of a multitude of panels that each include integrated accommodating spaces and that are interconnected with each other so as to build the desired structural element. In another example, parts of the structural element may be constructed of a truss structure and individual panels may be inserted into and connected with the truss structure.

For example, such a panel could include at least one accommodating space (that may, for example, be a complicatedly designed channel structure that may, for example, be used for heating/cooling of the panel itself (for example, heated/cooled air may be directed through the accommodating space corresponding heating/cooling elements may be accommodated with the accommodating space. However, this is only one example. In general, the at least one accommodating space of the panel may be used for any conceivable functional component.

According to a further embodiment, the structural element further comprises a plurality of panels. At least two panels of the plurality of panels each comprises at least one accommodating space that is integrated within the corresponding panel as part of the corresponding panel. The plurality of panels are interconnected with each other such that at least two accommodating spaces of the individual panels together build a network of accommodating spaces.

Such a network of accommodating spaces may, for example, build a conduit network (e.g., for electrical wiring, fluid guiding, etc.).

According to a further embodiment, the structural element further comprises a plurality of tube-like members that are interconnected with each other. Each of the plurality of tube-like members includes at least one accommodating space for accommodating a functional component.

The tube-like members may, for example, be the hollow rods/beams described further above. Such tube-like members may, e.g., be hollow carbon fiber rods or any other hollow rods that provide the necessary mechanical stability. The individual tube-like members may be interconnected with each other in any suitable way, such as by corresponding connecting means (which may, e.g., be the node elements described further below). Optionally, at least some of the individual accommodating spaces may be interconnected with each other, so as to build common accommodating spaces or at least some of the accommodating spaces may be isolated from each other to act as accommodating spaces for different functional components. The tube-like members may all have the same inner and outer diameter, or they may have deviating diameters, for example to build different flow cross-sections when they are used as fluid conduits. Further, at least some of the tube-like members may comprise more than one accommodating space. For example, the hollow space within the tube-like members may be divided into two or more accommodating spaces by corresponding internal separators, such as corresponding inner walls that run along the corresponding tube-like member.

The relative arrangement of the individual tube-like members with each other is determined by the bioinspired generative design, as described further above, according to the set constraints, such that the overall functional requirements as well as the load carrying requirements are met.

According to a further embodiment, the plurality of tube-like members together build a truss structure that builds the generative structure.

The truss structure may in particular be designed to carry the mechanical loads of the structural element. For example, the tube-like members may be connected with each other by some connecting means such as the node elements described further below. Such connecting means may also provide the possibility to insert other elements, such as (for example) panels that may for example be used as shelves, into the truss structure and to connect them with the truss structure. Further, such panels may optionally also comprise accommodating spaces, as described further above, that may optionally be connected to at least one of the accommodating spaces within the tube-like members, such that the corresponding accommodating space within the tube-like members and the corresponding accommodating space within such a panel together build a common accommodating space, for example to build a fluid conduit or a conduit for electrical wiring.

According to a further embodiment, the structural element further comprises a plurality of node elements. The plurality of tube-like members are interconnected with each other by the plurality of node elements.

Such node elements may, for example, be additively manufactured (e.g., 3D printed) or casted (for example from a metallic material or a plastics material) and are configured to interconnect at least two of the tube-like members with each other. However, the node elements may also be made in any other suitable way. To interconnect the tube-like members, the node elements may comprise corresponding joints for the tube-like members. The node elements (in particular the joints) may also provide interconnection of tube-like members having different dimensions (for example outer and inner diameter) with each other.

According to a further embodiment, at least one of the plurality of node elements is configured to interconnect at least one accommodating space of at least a first tube-like member with a corresponding accommodating space of at least a second tube-like member so as to build a common accommodating space that extends between the at least first tube-like member and the at least second tube-like member.

For this, the corresponding node element may comprise corresponding channels that interconnect the corresponding accommodating spaces with each other. The node elements may also be configured to interconnect accommodating spaces having different dimensions (e.g., different inner diameters of the tube-like members) with each other. Further, if at least one of the tube-like members comprises more than one accommodating space, the nodes may be configured to allow connection of individual ones of these accommodating spaces with individual one of the accommodating spaces of another tube-like member. In other words, the channels within the node elements together with the corresponding joints, in some configurations, build an adaptor system for different tube-like members that allow to build a network of accommodating spaces. The node elements may also interconnect more than two accommodating spaces with each other so as to build an intricate network, for example to provide a complicated tubing or wiring structure throughout the structural element.

According to a further embodiment, at least one of the plurality of node elements comprises an attachment member for fixing components to the corresponding node element.

The attachment member may, for example, be provided by ribs and bolts. The node elements can, for example, be aligned with different shelf edges or corners of a panel. Node elements which coincide in position with the edge or corner of a panel may have ribs with holes to provide solid attachment to the panels. The panels may be inserted into the ribs and may be connected to them by the bolts. In this way, the node elements (or rather their attachment members) can be used to interconnect multiple panels or other components with each other. For example, one node element can have an attachment member that allows to attach four different panels to the node, so as to build a panel structure within the truss structure, which may, for example, be used as shelfs. However, any other number of attachment members may be provided at the node elements and different node elements can in particular have a different number of attachment members, according to the requirements. Every shelf can have more than one attachment point (i.e., attachment members on different nodes). Splitline panels could follow the same approach, i.e., various nodes could be aligned with the splitline position to provide sufficient support.

According to a further embodiment, the structural element further comprises at least one cover panel. The at least one cover panel is arranged within a gap between at least two tube-like members of the plurality of tube-like members.

The cover panels may be any kind of suitable panel, and may, for example, be regular honeycomb panels. The cover panels may, for example, be clipped between the tube-like members so as to close the gaps between the tube-like member (e.g., the gaps in the truss structure), in order to build an at least substantially closed surface between the tube-like members.

According to a further embodiment, at least one of the accommodating spaces comprises at least to sub-spaces that are separated from each other to accommodate multiple functional components.

For example, the corresponding accommodating space may be separated by corresponding wall elements into the sub-spaces. In this way, for example the hollow interior within a tube-like member may be separated into at least two sub-spaces, such that, for example, within a single tube-like member two separated and individual sub-spaces are build which each act as their own accommodating space. In this way, multiple functional components can be accommodated within a single accommodating space. In this way, for example, a single tube-like member may include a forward and return fluid conduit, and, for example, a wiring conduit. However, this is only one example, and other combinations are possible, too. In the same way, in corresponding configurations, the accommodating spaces within panels may be separated into multiple sub-spaces.

According to a second aspect, an interior component for an aircraft is provided. The interior component comprises at least one structural element according to any one of the embodiments described herein.

According to an embodiment, the interior component is one of the following: an aircraft galley, a lavatory, a cabin monument, and a wall panel.

According to a third aspect, an aircraft is provided. The aircraft comprises a fuselage, a passenger cabin, and at least one structural element and/or at least one interior component according to any one of the corresponding embodiments described herein. The passenger cabin is enclosed by the fuselage. The passenger cabin comprises the at least one structural element and/or the at least one interior component.

### BRIEF DESCRIPTION OF THE DRAWINGS

In the following, exemplary embodiments are described in more detail having regard to the attached figures. The illustrations are schematic and not to scale. Identical reference signs refer to identical or similar elements. The figures show:
- **Fig. 1**: a schematic drawing of a galley based on current galley structure with bioinspired multifunctional panels having integrated functionalities.
- **Fig. 2**: a schematic drawing of a galley based on an exemplary new design structure with bioinspired multifunctional panels having integrated functionalities.
- **Fig. 3**: a schematic drawing of an alternative galley comprising an alternative structural element comprising multiple interconnected tube-like members.
- **Fig. 4**: a schematic drawing of a node element for interconnecting multiple tube-like members, shown in a first perspective.
- **Fig. 5**: a schematic drawing of a node element for interconnecting multiple tube-like members, shown in a second perspective.
- **Fig. 6**: a schematic drawing illustrating a particular exemplary path through multiple accommodating spaces of tube-like members and through multiple node elements.
- **Fig. 7**: a schematic drawing of an accommodating space that is separated into multiple sub-spaces.
- **Fig. 8**: a schematic drawing of a cover panel for covering a gap between tube-like members of a structural element.
- **Fig. 9**: a schematic drawing of an upper mounting arrangement for attaching the structural element to a cabin of an aircraft.
- **Fig. 10**: a schematic drawing of a lower mounting arrangement for attaching the structural element to a floor of a cabin of an aircraft.
- **Fig. 11**: a schematic drawing of a cabin monument comprising a structural element and having a lower carrier element and an upper exchangeable workdeck surface.
- **Fig. 12**: a schematic drawing of a cabin monument comprising a structural element and having a carrier element with integrated air extraction.
- **Fig. 13**: a structural element comprising fluid conduits and wiring harnesses that are attached to the outside of a truss structure.
- **Fig. 14**: a schematic representation of an aircraft comprising an interior component having a structural element according to the present disclosure.

### DETAILED DESCRIPTION

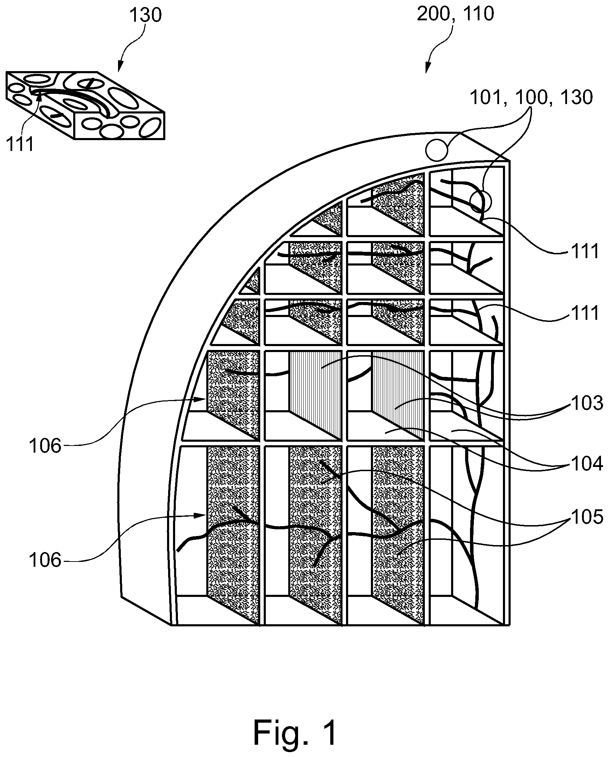

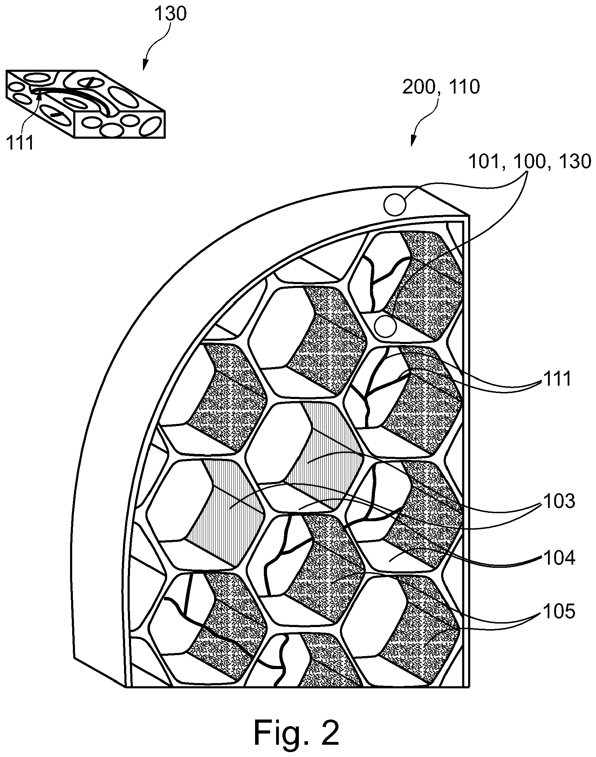

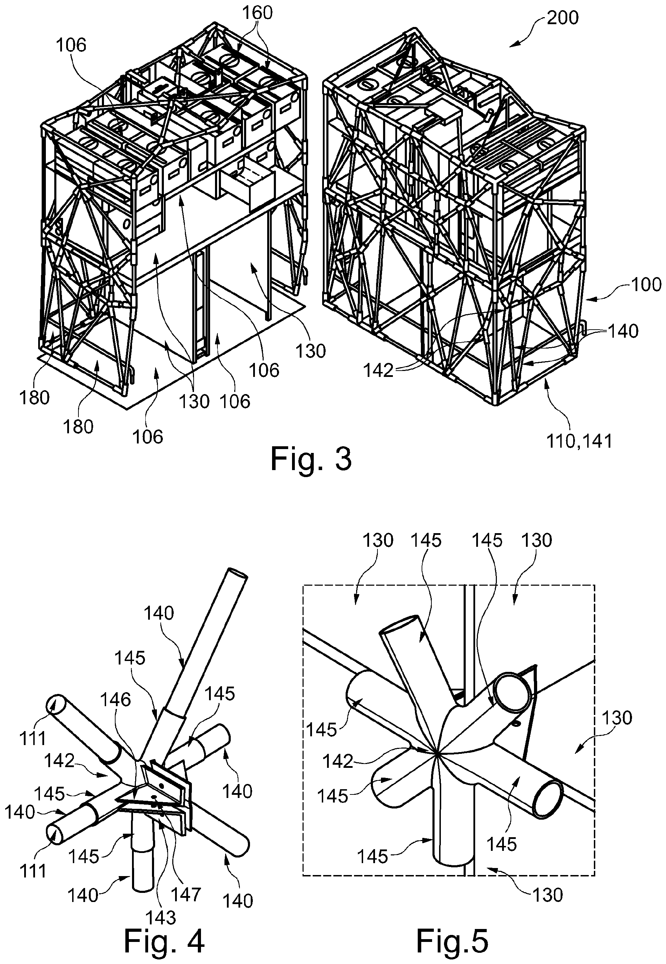

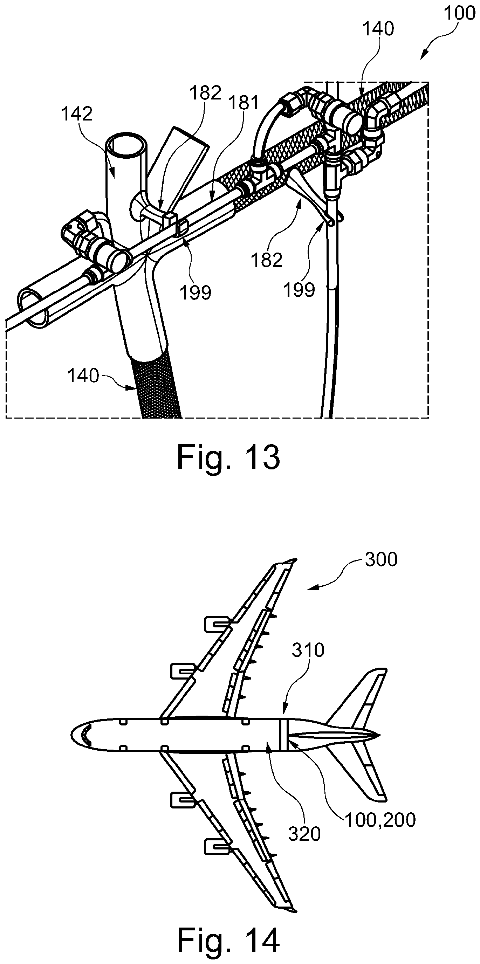

Fig. 1 shows a schematic drawing of an interior component 200 in the form of galley 200, especially for an aircraft 300 (aircraft 300 not shown in Fig. 1, see Fig. 14). This galley 200 is based on a current galley design having galley spaces 106 (only two indicated by reference signs) to accommodate transport units or galley devices 160 (so called GAINs 160 - Galley Insert Equipment; not explicitly shown in Figs. 1 and 2, see, e.g., Fig. 3). However, other than in the state of the art, the galley 200 comprises structural components 100 that integrate multifunctional panels 130 with integrated functionalities.

Fig. 2 shows a schematic drawing of an exemplary embodiment of a galley 200, especially for an aircraft 300 (see Fig. 14), as an example for a new design structure. The new design structure of the galley spaces 106 is designed with honeycomb shape (i.e., the front openings of the galley spaces 106 (only two indicated by reference signs) build a honeycomb shape).

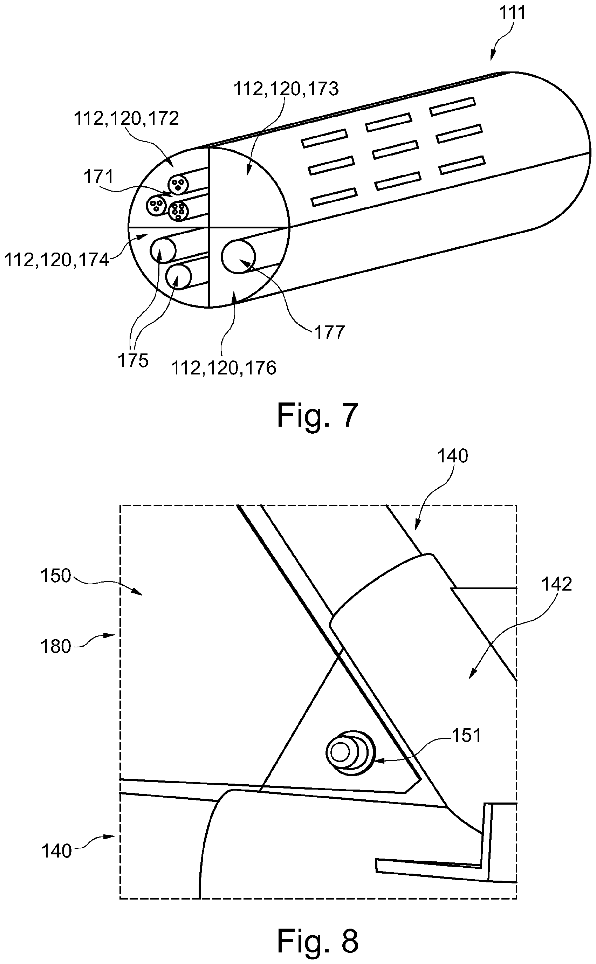

The configurations of Fig. 1 and 2 both consist of a basic panel structure 1 (consisting of panels 130) having accommodating spaces 111 in the form of tunnels and cavities that can be used for, e.g., electrical wiring (e.g., for wiring harnesses accommodated within the accommodating spaces 111), plumbing (e.g., in the form of fluid conduits build by the accommodating spaces 111 itself or by corresponding conduit elements inserted into the accommodating spaces 111), or any other functionalities. For example, other functional components 120 (not shown, see, e.g., Fig. 7), such as cable channels, sensors (e.g., temperature sensors), heating and/or cooling elements, exhaust channels, thermally insulating elements, or any other conceivable functional component 120, may be arranged within the accommodating spaces 111. The accommodating spaces 111 may have an intricate design and may build a network of accommodating spaces 111, that can, for example, be uses, to interconnect different parts. The upper left part of Figs. 1 and 2 show a cross section of one of the panels 130 illustrating the possibility for complicated designs of the accommodating spaces 111. For example, the accommodating spaces 111 may be used to provide the above mentioned GAINs 160 (which may be placed in the galley spaces 106) with electricity, water supply and drainage, exhaust channels, etc. The corresponding panels 130 may, for example, also comprise corresponding interconnection portions for such GAINs (or other components).

The layout of the structure of the accommodating spaces 111 (in particular their overall shape and paths) is generated/designed by computer-aided software and is specific to individual requirement profiles (e.g. optimal wiring, load). In particular, the accommodating spaces 111 build a generative structure 110 providing a bioinspired generative design that resembles structures occurring in nature, as described herein further above. For example, such a structure could be determined by a corresponding generative engine using artificial intelligence based on functional and stability and/or structural integrity requirements as inputs. Further, the macro-shape, meaning, for example, the shape and arrangement of the panels 130 itself, that together build the galley 200, may also be designed by such generative design in order to best meet the structural integrity requirement. The accommodating spaces 111 (tunnels and cavities) can, e.g., comprise seamlessly adapting diameters or fulfill different functional requirements. This may, for example, allow to build pressure and/or sewage pipes. Further, within each of the accommodating spaces 111, multiple functional components 120 may be arranged. This will also allow new possibilities for two-phase flow and local thermal management. Inside the panels 130 (via the accommodating spaces 111) functionalities such as electrical wiring, plumbing, or other functional components can be integrated directly without the need of further parts (e.g. mounts, brackets). The basic panel structure 1 can further be enhanced, e.g., with insulation panels 103 or other functional panels 103 if thermal insulation is necessary. Such thermal insulation may also be provided from within the accommodating spaces 111 itself, e.g., by coating them with corresponding insulating materials. The panels 130 of the basic panel structure 1 may also be used as a compartment base 104 enhancing the possibility for e.g. electrical wiring, plumbing and/or other functionalities throughout the galley 200. The compartment bases 104 are also inserted in special cavities creating a connector system to reduce the number of screws needed. Further, an ultra-lightweight version of the basic panels 130 may be used for compartment separations 105.

However, the new design will also allow to rethink current galley layout and structure. The panels will enable new individualization possibilities, e.g. combination or separation of different compartments or even a structure without specific compartments. They can also be an enabler for work-modules instead of current GAINs 160 (Galley Insert Equipment). The panels 120 can include a connector system between panels 130 with optimal design to avoid leakage.

Fig. 3 shows an alternative galley 200 that comprises a structural element 100 that includes a plurality of tube-like member 140 and a plurality of node elements 142 interconnecting the tube-like members 140 together to build a truss structure 141. The truss structure 141 also build a generative structure 110, as described herein. The structural element 100 may refer to any sub-set of the tube-like members 140 and the node elements 142 or also to the whole truss structure 141. In particular, the galley 200 may also be constructed from multiple independent such structural elements 100, such that the galley may, for example, be adjusted to the current requirements. The left side of Fig. 3 shows the galley 200 from a front view while the right side of Fig. 3 shows the galley 200 from a rear view.

The plurality of tube-like members 140 may, for example be hollow rods/beams that are used to integrate certain functionalities (such as plumbing/wiring) within the structural element 100 itself. However, optionally it is also conceivable, that at least some of the tube-like members 140 are solid tubes without having hollow spaces. Such tubes could be beneficial to increase the structural integrity at positions, where no integrated functionality is needed. The tube-like members 140 may, for example, be carbon fiber rods or any other suitable tube-like member 140. The hollow space within each of the hollow tube-like members 140 builds at least one accommodating space 111 (not explicitly shown in Fig. 3, see, for example, Fig. 4), which may optionally also be divided into multiple sub-spaces 112 (also not shown in Fig. 3, see Fig. 7), for example to incorporate multiple functional components 120. It should be appreciated that the structural element 100 in the configuration of Fig. 3 may refer to any sub-set of the tube-like members 140 and the node elements 142. The tube-like members 140 build gaps 180 between each other, which may, for example, be covered by the cover panels 150 described with regard to Fig. 8.

The galley 200 of Fig. 3, as illustrated, also includes a plurality of GAINs 160 that are inserted into the galley spaces 106.

The structure (i.e., alignment and positioning) of the tube-like members 140, that together build the truss structure 141, is engineered by generative design resembling structures occurring in nature, as already described further above. In particular, such bioinspired generative design takes as inputs the functional requirements, e.g., based on which functionalities are required at which position within the galley 200, as well as the structural requirements. For example, if at one position within the galley 200 a water tank is present that should provide water to a GAIN 160 within the galley 200, tube-like members 140 running between the water tank and the GAIN 160 may serve as water supply lines. In another example, certain ones of the tube-like members 140 may guide wiring harnesses to the GAINs 160, for example to provide them with electrical energy or to provide signal paths for sensors, etc. The tube-like members 140, by means of their accommodating spaces 111, may also build corresponding networks of accommodating spaces 111, such that, for example, multiple GAINs 160 may be provided to the same water supply or power source. Further, the accommodating spaces 111 may, for example, include fluid conduits in general (for example for air, water, or other liquids), cable channels, heating and/or cooling devices or conduits conducting heating or cooling fluids (for example to cool or heat a certain GAIN 160 or other component), sensors (for example temperature or pressure sensors), thermally insulating elements (such as respective coatings), or exhaust channels. However, this enumeration is only exemplary in nature. In general, any suitable functional component(s) 120 may be arranged within the accommodating spaces 111 in any desired manner. In particular, the generative design takes into account all of these requirements as well as the structural integrity requirement and provides a structure of the truss structure 141 (i.e., an orientation and positioning of the tube-like members 140) or in general of the structural element 100 that optimizes the structural integrity while simultaneously providing the desired integrated functionalities.

The galley 200 of Fig. 3 further includes a plurality of panels 130, which may for example be configured just as the panels 130 described with regard to Figs. 1 and 2 and which itself may include correspondingly designed accommodating spaces 111. The accommodating spaces 111 of the panels 130 may, for example, be connected to certain interfaces within the truss structure 141 such that they can participate in the desired functionality (for example by providing fluid conduits or wiring harnesses that run through the tube-like members 140 and through the panel 130, and, for example, to one or more GAINs 160. Horizontal panels 130 may, for example, also be configured as a kind of heating plate, e.g., by incorporating heating elements like resistive heating elements or by guiding hot air or other gases/fluids or water through corresponding accommodating spaces 111 (or conduits provided therein) of the tube-like members 140 and/or panels 130 (for example, to cook or keep meals warm). This is only one example. Other functional components 120 may also be included in the panels 130 and/or interconnected to the tube-like members 140.

In summary, the galley 200 of Fig. 3 (just as the galleys 200 of Figs. 1 and 2) integrates certain functionalities directly into the galley 200 without having to attach or otherwise fix the corresponding functional components 120 to the galley 200.

Figs. 4 and 5 show an exemplary node element 142 for interconnecting multiple tube-like members 140 with each other. Fig. 4 show the node element 142 connected to six tube-like members 140 at corresponding joints 145. Fig. 5 shows the node-element 142 without any tube-like elements connected. Here, it can be seen that the node element 142 itself includes hollow spaces that can be used to interconnect the accommodating spaces 111 of different tube-like members 140 with each other, so as to build common accommodating spaces 111. The interior of the node element 142 may be designed to interconnect the accommodating spaces 111 of the tube-like elements 140 as desired. For example, the upper two of the joints 145 (or rather their hollow spaces) could be connected with each other, the lower two of the joints 145 could be connected with each other, and the joints 145 running in the horizontal direction could be connected with each other. In this way, two accommodating spaces 111 of two tube-like members 140 would be connected each. However, it should be appreciated that this is only one example. The node element 142 could also implement any other connection scheme. For example, the node element 142 could interconnect all the tube-like members 140 together, could isolate some of the tube-like members 140, and so on. Further, the hollow spaces of individual ones of the joints 145 can be separated in sub-spaces 112 (not shown), just as the accommodating spaces 111 of the tube-like members 140 as described with regard to Fig. 7, which could internally be connected in the desired pattern.

The node element 142, as illustrated in Fig. 4 and 5, further comprises an attachment member 143. The attachment member 143 may be used, for example, to attach one or more panels 130 (which could be standard honeycomb panels or the multifunctional panels 130 as described herein) to the node element 142, for example to build a shelf structure. Fig. 5 shows four panels 130 connected to the node element 142. As illustrated, the attachment member 143 comprises ribs 146 into which the panels 130 can be inserted and bolt holes 147. Each of the node elements 142 can, for example, be aligned with different shelf edges or corners of a panel 130. Node elements 142 which coincide in position with the edge or corner of a panel 130 may have ribs 146 with bolt holes 147 to provide solid attachment to the panels 130. The panels 130 may be inserted into the ribs 146 and may be connected to them by bolts.

It should further be noted that the diameters of the individual joints 145 of a node element 145 as well as of the tube-like members 140 connected to it may be different from each other, so that differently sized tube-like members 140 can be interconnected with each other.

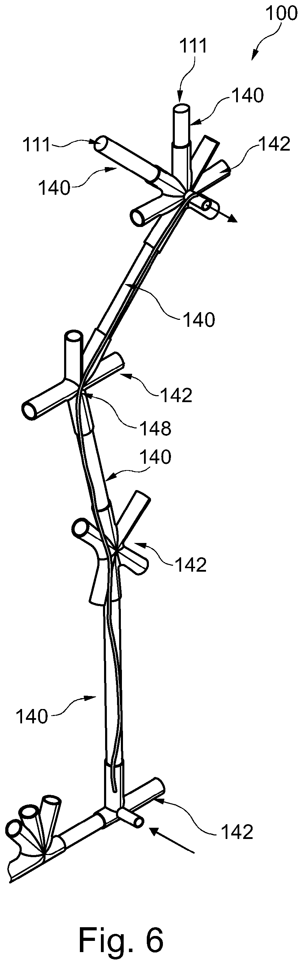

Fig. 6 shows an exemplary path 148 through multiple tube-like members 140 (or rather through their accommodating spaces 111) and through multiple node elements 142 interconnecting the tube-like members 140. For example, this could be used to build a continuous fluid channel or a channel for wiring harnesses. Only as one non-limiting example, at the bottom inlet (indicated by the arrow), a power source or a supply unit for a fluid may be located and connected to the lowest node element 142. To the outlet (indicated by the arrow) of the upper node element 142, a receiver for the fluid or a power receiver could be arranged. The indicated path 148 may then, for example, be used as a fluid passage or as a conduit for electric wiring. However, this is only one example. In another example, the lower inlet and the upper outlet could also be connected with corresponding panels 130 having itself accommodating spaces 111 integrated for functional elements, which may, for example, together with the path 148 act as a conduit or similar.

Fig. 7 show a schematic drawing of an accommodating space 111 that is separated into multiple sub-spaces 112. The accommodating space may for example be an accommodating space 111 within one of the tube-like members 140 or within one of the multifunctional panels 130, as described above. In the illustrated example, the accommodating space 111 is separated into four sub-spaces 112. However, it should be appreciated that the accommodating space 111 may be separated into any desirable number of sub-spaces 112. Each of the sub-spaces 112 is used for a different functional component 120. In the illustrated example, the top left sub-space 112 is used as a cable channel 172 for a wiring harness 171; the top right sub-space 112 is used as an exhaust channel 173; the lower left sub-space 112 is used as a fluid conduit 174 containing two fluid pipes 175 (for example a supply line and a return line); and the lower right sub-space 112 is uses as a refrigerant channel 176 for a refrigerant pipe 177. It should be appreciated that these are only examples for functional components 120 and, just as in the undivided accommodating spaces 111, any other conceivable functional component 120 may be arranged. Further one of the sub-spaces 112 may also include more than one functional component 120. As one non-limiting example, the fluid conduit 174, the exhaust channel 173, and the refrigerant channel 176 could each additionally comprise sensors such as leakage or temperature sensors (not shown).

Fig. 8 shows an exemplary cover panel 150. As can be seen with regard to Fig. 3 and as already indicated in the discussion with regard to Fig. 3, between the individual tube-like members 140, gaps 180 are present. These gaps 180 may be closed by attaching such cover panels 150 within or over the gaps 180. For example, such cover panels 150 could be connected to the node elements 142 connecting the tube-like members 140. For example, as illustrated, the cover panel may be connected to at least one of the node elements 142, and may, for example, be clipped, screwed, riveted, glued, or connected in any other suitable way. In the illustrated configuration, the cover panel 150 is connected by means of a pin 151, which may, for example, be a rivet or screw. It should further be appreciated that the cover panels 150 may be dimensioned and connected to the node elements 142 such that two neighboring cover panels 150 are flush with each other and together build a substantially closed surface. In other words, in this configuration, the cover panels 150 would not be recessed within the gap 180, as illustrated in Fig. 8, but would lie on top of the node elements 142. Further, the cover panels 150 could alternatively or additionally also be directly connected to the tube-like members 140.

The cover panel 150 may be present in different categories. For example, such categories could include a visual category, a structure category, and a thermal insulation category. The visual category cover panels 150 may be used to provide individual/customized designs (for example to represent a corporate design of an airline. The structure category cover panels 150 may provide additional mechanical support to the structure. The thermal insulation category cover panels 150 may provide dedicated areas with proper thermal insulation, for example in cooling compartments for aircraft trolleys. Other categories could be envisaged, too. Further, some of the cover panels 150 may belong to multiple categories.

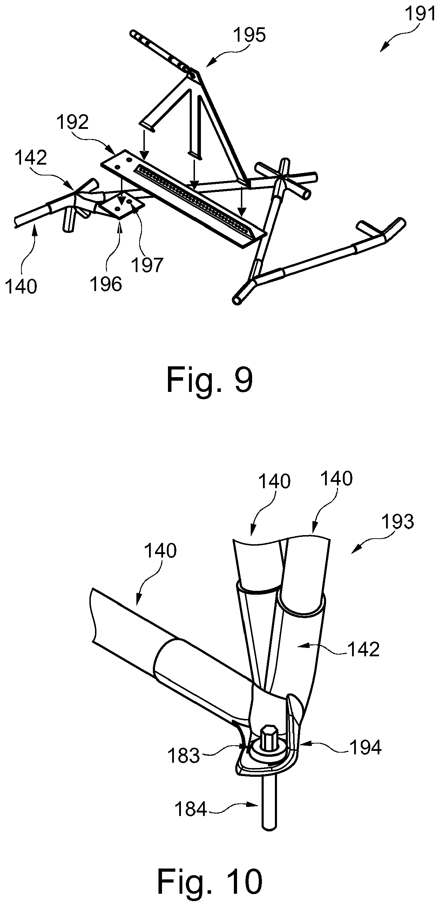

Figs. 9 and 10 show mounting arrangements for mounting the structural element 100 or a interior component 200, such as a galley 200, comprising the structural element 100 to an interior of a cabin of an aircraft. In order to mount the structural element 100 or the interior component 200 to the cabin, an upper mounting arrangement 191 is shown in Fig. 9. Fig. 10 shows a lower mounting arrangement 193 for mounting the structural element 100 to a floor of the cabin.

The upper mounting arrangement 191 as illustrated comprises a flat surface element 196 which comprises bolt holes 197. The flat surface element 196 is arranged at one of the node elements 142 closest to an upper cabin mount 195 (for example an uppermost node element 142. A rail 192 can be attached to the flat surface element 196, for example by bolts that engage the bolt holes 197. Instead of bolts, the rail 192 could also be attached in any other suitable way to the corresponding node element 142, for example by screwing, welding, or using another suitable technique. The rail 192 may then be attached to the cabin mount 195, for example in adjustable positions. This allows at least slight adjustments of the positioning within the cabin, for example for tolerance adjustments. Optional, multiple upper mounting arrangements 191 may be provided.

Fig. 10 shows a lower mounting arrangement 193. The lower mounting arrangement 193 comprises a mounting bracket 194 which is fixedly attached to a suitable one of the node elements 142, for example to a lowermost node element 142. The mounting bracket 194 may, for example, be welded to the corresponding node element 142 or may be attached in another suitable way. The mounting bracket 194 may also be an integral part of the corresponding node element 142, which is, for example, additively manufactured together with the corresponding node element 142. The mounting bracket 194 may, for example, comprise a bolt hole 183, as illustrated, which can be used to attach the lower mounting arrangement 193 to a floor of the cabin by means of a bolt 184 or in any other suitable way. Optional, multiple lower mounting arrangements 193 may be provided.

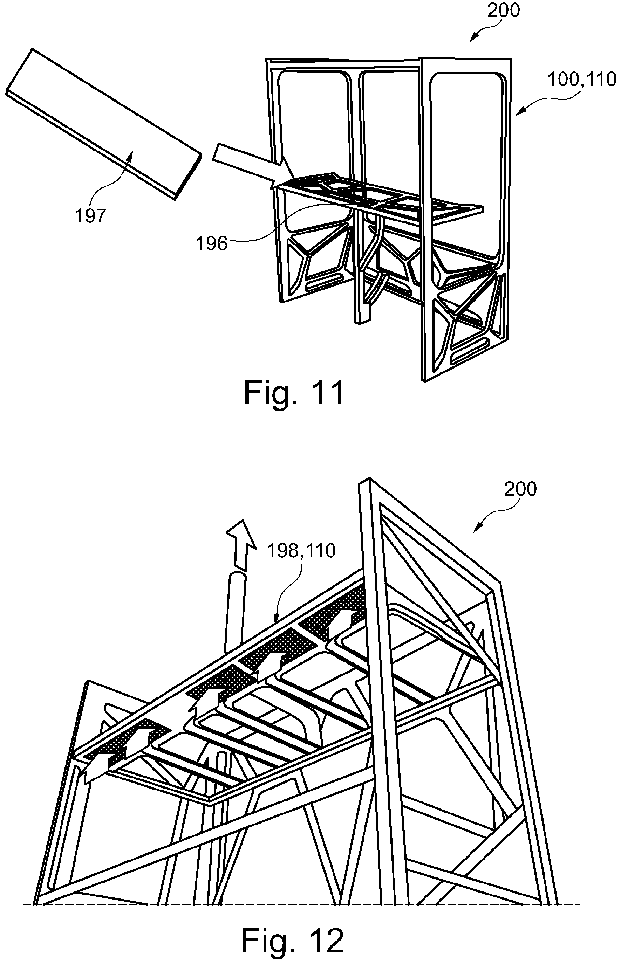

Fig. 11 shows a schematic drawing of an interior component 200, such as a cabin monument, that comprises a structural element 100 having a lower carrier element 196 and a exchangeable workdeck surface 197. The lower carrier element 196 is a load optimized element that utilizes the same mechanism as described with regard to the truss structure 141 described above. The lower carrier element 196 provides mechanical stability/support. In particular, the lower carrier element 196 may also comprise, for example, tube-like elements 140 having integrated accommodating spaces which may, for example, be used as fluid conduits (for example for heating and/or cooling) or which may comprise other functional components 120, as described herein (not shown in Fig. 11). The exchangeable workdeck surface 197 may comprise different exchangeable surface elements which may be replaced depending on the current utilization of the interior component 200. The lower carrier element 196 together with the remaining structural element 100, i.e., the remainder of the interior component 200, build a load optimized bionic structure (which can, for example, also comprise a generative structure 110, as described herein) that integrated functionalities.

Fig. 12 again shows an interior component 200, similar to the interior component 200 of Fig. 11. Here, the generative structure 110 comprises a horizontal element 198. The horizontal element 198 itself may also comprise a generative structure 110 having integrated accommodating spaces 111 (not shown), much like described with regard to the multifunctional panels 130 of this disclosure. However, the horizontal element 198 also is "beam-like", just like the truss structure 141 described herein, and incorporates functionalities such as exhaust channels.

Fig. 13 shows an alternative or an adjustment to the arrangement described with regard to Figs. 3 to 10. Here, pipes 181 (and/or a wiring harness, not shown) are supported outside along with the tube-like members 140. Guides 199 for the pipes 181 (and/or wiring harness) are integrated in the node elements 142 or are attached to the tube-like members 140 with a hyperjoint 182.

Fig. 14 shows an aircraft 300. The aircraft comprises a fuselage 310 and a passenger cabin 320 enclosed by the fuselage 310. At least one structural element 100 and/or at least one interior component 200 (for example a galley 200) comprising such structural component 100, as described herein, is arranged within and attached to the passenger cabin 320.

It should be noted that "comprising" or "including" does not exclude other elements or steps, and "one" or "a" does not exclude a plurality. It should further be noted that features or steps that have been described with reference to any of the above embodiments may also be used in combination with other features or steps of other embodiments described above. Reference signs in the claims are not to be regarded as limitation.

### LIST OF REFERENCE SIGNS

- 100: structural element
- 101: basic panel structure
- 103: insulation panel
- 104: compartment base
- 105: compartment separations
- 106: galley spaces
- 110: generative structure
- 111: accommodating space
- 112: sub-spaces (of accommodating space)
- 120: functional component
- 130: panel
- 140: tube-like members
- 141: truss structure
- 142: connecting means, node elements
- 143: attachment member (for fixing components to node elements)
- 144: internal separator (for sub-spaces)
- 145: joints (of the node elements for the tube-like members)
- 146: ribs
- 147: bolt holes
- 148: path
- 150: cover panel
- 151: pin
- 160: galley device, Galley Insert Equipment (GAIN)
- 171: wiring harness
- 172: cable channel
- 173: exhaust channel
- 174: fluid conduit
- 175: fluid pipes
- 176: refrigerant channel
- 177: refrigerant pipe
- 180: gap (between tube-like members)
- 181: pipes
- 182: hyperj oint
- 183: bolt hole
- 184: bolt
- 191: upper mounting arrangement
- 192: rail
- 193: lower mounting arrangement
- 194: mounting bracket
- 195: cabin mount
- 196: lower carrier element
- 197: exchangeable workdeck surface
- 198: horizontal element
- 199: guides for pipes and wiring harness

- 200: interior component, galley

- 300: aircraft
- 310: fuselage
- 320: passenger cabin

## Claims

1. Structural element (100) for a passenger cabin of an aircraft (200), the structural element (100) comprising:
a generative structure (110); and
a functional component (120);
wherein the generative structure (110) comprises at least one accommodating space (111);
wherein the functional component (120) is arranged within the at least one accommodating space (111); and
wherein the generative structure (110) comprises a load topology optimized structure based on a bioinspired generative design that is configured to enable the structural integrity of the structural element (100) while simultaneously providing integrated functionalities via the functional component (120).

2. Structural element (100) of claim 1, wherein the functional component (120) comprises at least one of the following:
a fluid conduit (174);
a cable channel (172);
a wiring harness (171);
a sensor;
a heating and/or cooling element;
a thermally insulating element; and
an exhaust channel (173).

3. Structural element (100) of any one of the preceding claims, wherein the structural element (100) comprises a plurality of accommodating spaces (111), wherein the plurality of accommodating spaces (111) are interconnected with each other so as to build a network of accommodating spaces (111).

4. Structural element (100) of any one of the preceding claims, further comprising at least one panel (130), wherein the at least one panel (130) itself includes at least one accommodating space (111) that is part of the panel (130).

5. Structural element (100) of claim 4, further comprising a plurality of panels (130);
wherein at least two panels (130) of the plurality of panels (130) each comprises at least one accommodating space (111) that is integrated within the corresponding panel (130) as part of the corresponding panel (130); and
wherein the plurality of panels (130) are interconnected with each other such that at least two accommodating spaces (111) of the individual panels (130) together build a network of accommodating spaces (111).

6. Structural element (100) of any one of the preceding claims, further comprising a plurality of tube-like members (140) that are interconnected with each other;
wherein each of the plurality of tube-like members (140) includes at least one accommodating space (111) for accommodating a functional component (120).

7. Structural element (100) of claim 6, wherein the plurality of tube-like members (140) together build a truss structure (141) that builds the generative structure (110).

8. Structural element (100) of claim 5 or 6, further comprising a plurality of node elements (142);
wherein the plurality of tube-like members (140) are interconnected with each other by the plurality of node elements (142).

9. Structural element (100) of any one of claims 6 to 8, wherein at least one of the plurality of node elements (142) is configured to interconnect at least one accommodating space (111) of at least a first tube-like member (140) with a corresponding accommodating space (111) of at least a second tube-like member so as to build a common accommodating space (111) that extends between the at least first tube-like member (140) and the at least second tube-like member (140).

10. Structural element (100) of claim 8 or 9, wherein at least one of the plurality of node elements (142) comprises an attachment member (143) for fixing components to the corresponding node element (142).

11. Structural element (100) of any one of claims 6 to 10, further comprising at least one cover panel (150);
wherein the at least one cover panel (150) is arranged within a gap (180) between at least two tube-like members (140) of the plurality of tube-like members (140).

12. Structural element (100) of any one of the preceding claims, wherein at least one of the accommodating spaces (111) comprises at least to sub-spaces (112) that are separated from each other to accommodate multiple functional components (120).

13. Interior component (200) for an aircraft (300), wherein the interior component (200) comprises at least one structural element (100) according to any one of the preceding claims.

14. Interior component (200) of claim 13, wherein the interior component (200) is one of the following:
an aircraft galley (200);
a lavatory;
a cabin monument; and
a wall panel.

15. Aircraft (300), comprising:
a fuselage (310);
a passenger cabin (320); and
at least one structural element (100) of one of claims 1 to 12 and/or at least one interior component (200) of one of claims 13 and 14;
wherein the passenger cabin (320) is enclosed by the fuselage (310); and
wherein the passenger cabin (320) comprises the at least one structural element (100) and/or the at least one interior component (200).
